(19) Europäisches Patentamt

European Patent Office

Office européen des brevets

(11) **EP 4 694 074 A1**

(12) **EUROPEAN PATENT APPLICATION**

(43) Date of publication:
**11.02.2026 Bulletin 2026/07**

(21) Application number: **25194449.2**

(22) Date of filing: **06.08.2025**

(51) International Patent Classification (IPC):
*H04L 45/7459* (2022.01)    *H04L 45/023* (2022.01)
*H04L 45/48* (2022.01)

(52) Cooperative Patent Classification (CPC):
**H04L 45/7459; H04L 45/023;** H04L 45/48

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.08.2024 US 202418797822**

(71) Applicant: **Google LLC
Mountain View, CA 94043 (US)**

(72) Inventors:
• **KHODABANDEH, Hadi
San Francisco, California, 94105 (US)**
• **WANG, Yong
Mountain View, California, 94043 (US)**
• **GRIGGS, Tyler
Mountain View, California, 94043 (US)**

(74) Representative: **Betten & Resch
Patent- und Rechtsanwälte PartGmbB
Maximiliansplatz 14
80333 München (DE)**

(54) **ADAPTIVE IBLT HIERARCHY FOR VARYING PACKET LOSSES**

(57) The technology generally relates to systems and methods for transmitting data within a network. In accordance with aspects of the disclosure, nodes of the network may be configured to maintain invertible bloom lookup tables (IBLTs) based on received data packets and receive IBLTs from other nodes based on transmitted data packets. The IBLTs may be transmitted to downstream nodes in accordance with a frequency that allows for sufficient capacity of packet loss recovery, while also balancing bandwidth and latency requirements of the network.

Figure 6

**Description**

Transmission of data over a network can result in packet loss in which one or more nodes fail to receive part of the transmission. For various applications, including large multicast networks, packet loss can prevent necessary data from being received by nodes that are located downstream from the transmitter. However, even when redundancies are added to the network, the possibility of packet loss can remain. In a typical multicast network, it may be difficult to eliminate a sufficient amount of packet loss, and it can become prohibitive to address specific packet loss within a given transmission. In addition, spikes or bursts in packet loss can occur during particular periods of time. These packet loss spikes can pose additional problems for a network's ability to provide a reliable transmission. What is needed is a network for reliably transmitting data in a manner that can sufficiently recover lost packets, while maintaining desired levels of bandwidth usage and limiting the latency of recovery.

BRIEF SUMMARY

The disclosure generally relates to systems and methods for transmitting data within a network. In accordance with aspects of the disclosure, nodes of a network may be configured to maintain invertible bloom lookup tables (IBLTs) based on received data packets and receive IBLTs from other nodes based on transmitted data packets. The IBLTs may be transmitted to downstream nodes in accordance with a frequency that allows for sufficient capacity of packet loss recovery, while also balancing bandwidth and latency requirements of the network. In addition, the network can be analyzed so as to determine an appropriate number of IBLTs that are to be transmitted to downstream nodes. The network may implement a fine-tuned hierarchy of IBLTs that is configured in accordance with the network's behavior regarding packet loss. For example, the network may be analyzed to determine overall packet losses during transmission and may identify the frequency and extent to which spikes of packet loss occur within the network. The hierarchy of IBLTS may be selected so as to balance the capacity of the network to recover lost packets with the memory and bandwidth capabilities of the network. The network may also be configured to support a peer-to-peer local recovery of lost packets by having nodes access IBLTs to identify lost packets and request lost packets from neighboring nodes within the network. In addition, the hierarchy of IBLTs may be configured to spread lost packet IDs between multiple IBLTs in a manner that reduces the latency of recovery.

In accordance with aspects of the disclosure, systems and methods for data transmission may comprise: one or more upstream nodes within a network that are configured to: transmit data packets to a plurality of downstream nodes; maintain invertible bloom lookup tables (IBLTs) that correspond to the data packets transmitted to the plurality of downstream nodes; and transmit the IBLTs to the plurality of downstream nodes in accordance with a frequency that is based, at least in part, on one or more network properties relating to packet loss for transmissions to the downstream nodes.

In accordance with other aspects of the disclosure, a first subset of IBLTs are transmitted to one or more downstream nodes in accordance with a first frequency, and a second subset of IBLTs are transmitted to one or more downstream nodes in accordance with a second frequency, and the first frequency is less than the second frequency..

In accordance with still other aspects of the disclosure, the one or more network properties on which the frequency of IBLT transmission is based may include determining a latency of packet recovery due to potential bursts in packet loss. In addition, the one or more network properties on which the frequency of IBLT transmission is based may further include determining a size of the potential bursts in packet loss.

In accordance with yet other aspects of the disclosure, the IBLTs may be indexed based on an IBLT hierarchy having a plurality of hierarchy layers, and wherein the frequency of IBLT transmission is based on an index position of each IBLT within the IBLT hierarchy. In addition, the frequency of IBLT transmission may be based on a sequence for transmitting the IBLTs to the downstream nodes in accordance with the IBLT hierarchy. Transmitting the IBLTs to the plurality of downstream nodes may also include transmitting IBLTs from the plurality of hierarchy layers to one or more of the plurality of downstream nodes. In addition, the number of hierarchy layers within the IBLT hierarchy may be based on analysis of observed packet loss within the network.

In accordance with other aspects of the disclosure, a plurality of downstream nodes may be configured to: maintain a stored IBLT that is based on the data packets that are received from the one or more upstream nodes; determine a difference between the IBLT that was transmitted and the stored IBLT; identify data packets that were lost in transmission, based on the resulting difference; and request lost data packets from the one or more upstream nodes.

BRIEF DESCRIPTION OF THE DRAWINGS

Figure 1 is a block-diagram of a multicast network having a tree topology.
Figure 2 is a block-diagram of a multicast network having a redundant DAG topology.

Figures 3-5 are chart diagrams representing IBLTs in accordance with aspects of the disclosure.
Figure 6 is a block-diagram of an IBLT hierarchy in accordance with aspects of the disclosure.
Figure 7 is a diagram of network node transmissions in accordance with aspects of the disclosure.
Figure 8 is a flow-diagram for network operations in accordance with aspects of the disclosure.

DETAILED DESCRIPTION

The transmission of data between nodes within a network can result in the loss of data packets. Data packet loss may occur, for example, as the result of a buffer within a node reaching a capacity limit, an application not receiving enough CPU cycles, as well as from other types of data transmission failures. Given the potential for packet loss, a typical multicast protocol may lack sufficient reliability. For example, a multicast involving financial information, or other sensitive data, may require a network to multicast data with little-to-no packet loss. In accordance with aspects of the disclosure, a network layer can be used with an existing network topology so as to increase the reliability of data transmissions in an efficient manner and allow for local recovery of lost packets through re-transmission from nearby nodes within the network.

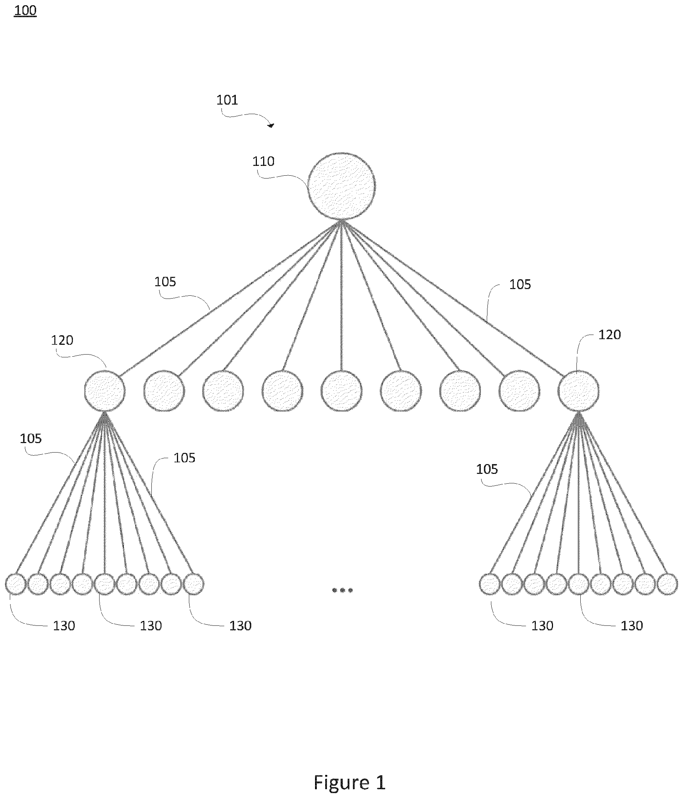

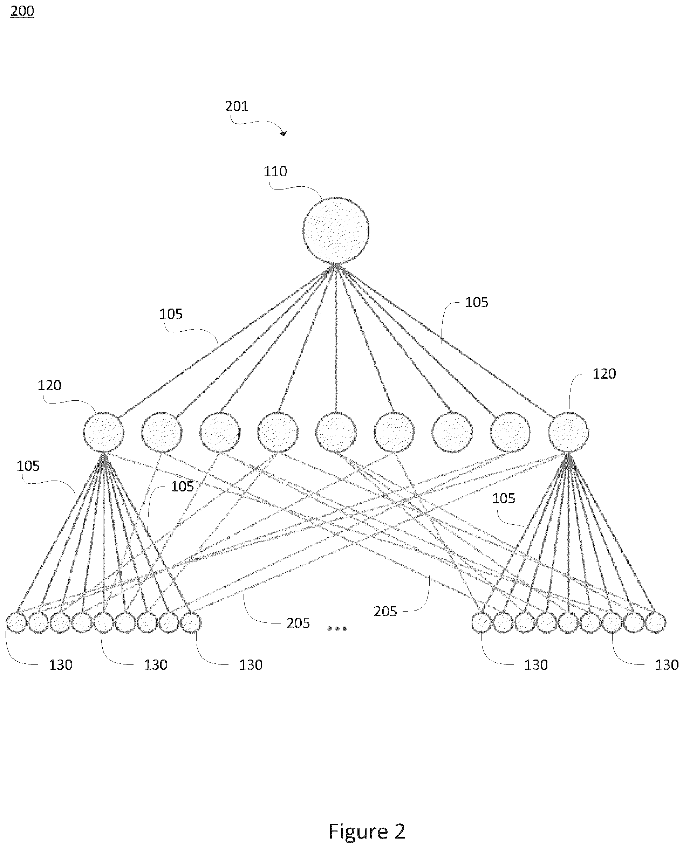

Figure 1 is a diagram 100 of a multicast network 101 that includes a plurality of nodes 110, 120, and 130. Node 110 may act as an originator, or a producing node, in which a message is produced and transmitted via data paths 105 to a plurality of intermediate nodes 120. Having received data packets from node 110, intermediate nodes 120 are configured to further transmit the data packets to downstream nodes 130 within multicast network 101. Nodes 130 may represent final recipients; however the transmission of a message may proceed from an originator node 110 through a plurality of intermediate nodes 120 before reaching a final recipient. For example, downstream nodes 130 may themselves act as intermediate nodes to further downstream nodes (not shown). In addition, downstream nodes may receive data transmissions from more than one node. For example, Figure 2 is a diagram 200 of a network 201 having a redundant directed acyclic graph (DAG) topology with each downstream node 130 being configured to receive data packets from more than one intermediate node 120 via data paths 105 and 205. Data paths 205 may function so that network 201 acts as a redundant DAG. Nodes 110, 120, 130 may take the form of any computing device, such as a server, that is configured to act as a node within the transmission network 101 or 201. In addition, data paths 105 and 205 may be any form of data transmission, including wireless, electrical, and optical transmissions.

In accordance with aspects of the disclosure, nodes 110, 120, 130 may be configured to transmit and receive invertible bloom lookup tables (IBLTs) in connection with data transmissions. These IBLTs can each be a particular size. For example, each IBLT may be configured to have the largest size that is capable of being transmitted within a single User Datagram Protocol (UDP) packet within the network. Accordingly, a single packet can contain the entirety of an IBLT, without requiring the IBLT to be fragmented over multiple packets.

When two entities exchange data, a set reconciliation problem exists with respect to confirming that the correct set of data has been received. IBLTs can be used by nodes of a network to address set reconciliation in the face of asymptotically optimal communication complexity. In particular, the IBLT peel operations described herein can be used to detect lost packets by comparing the set of packets sent at the sender to the set of packets received at the receiver. In addition, unlike a standard Bloom filter, an IBLT allows for the retrieval of the elements stored in it, supporting both insertion and deletion operations and enabling efficient computation of set differences between two IBLTs.

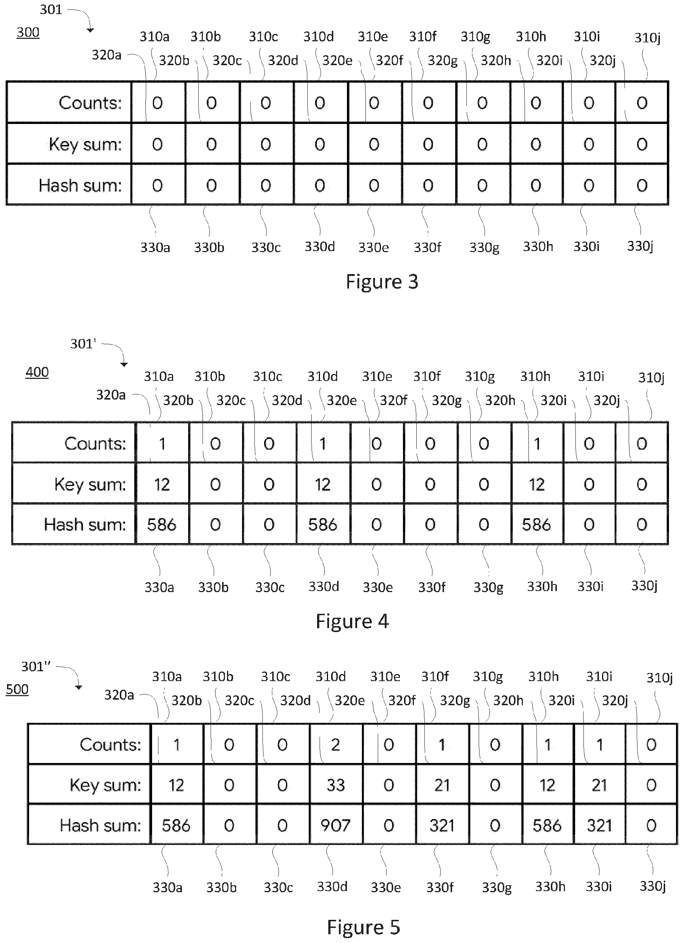

The IBLTs can take the form of a set of tables having entries that are based on the data that is being transmitted from a first node, such as node 120, to a second node, such as node 130. For example, Figure 3 is a chart 300 of an IBLT 301 in an initial or empty state. IBLT 301 contains a count index 302 that stores a count of the number of elements that have been inserted into each index position 310a-j. A key sum index 304 stores a summation of key values for each index position 320a-j, while a hash sum index 306 stores a summation of hash values at index positions 330a-j. The hash values 330a-j are based on hashes of the keys that have been inserted into each corresponding index position 320a-j.

IBLT 301 contains ten positions for index 302, 304, and 306. Accordingly, IBLT 301 may be referred to as having a size of ten. Each of the ten positions 310a-j for index 302 may be assigned a value from left-to-right of "0" to "9", and a particular data element may be added to each position 310a-j having a corresponding hash value for that particular data element. In addition, each data element may be subjected to multiple hashes in which the data element produces a different result. For example, Figure 4 is a chart 400 of IBLT 301' in which an element "12" has been added to the IBLT. In adding this data element to IBLT 301', it may be determined that data element "12" has the following three hash values, when three hash operations are performed in connection with the ten available entry values: $h_1(12)=0$, $h_2(12)=3$, $h_3(12)=7$. Accordingly, in IBLT 301', a "12" has been added to the key sum index 304 at positions 320a, 320d, and 320h, which correspond to the 0, 3, and 7 positions within index 304. The count index 302 has also been updated to indicate that a single element has been added to positions associated with entry positions 310a, 310d, and 310h. An additional, a larger hash value for data entry 12, which is not limited to the ten values for index positions, has been calculated to be 586. Accordingly, a "586" is added to hash sum index 306 at index positions 330a, 330d, and 330h. Thus, IBLT 301' has been updated in chart 400 from its initial state, so as to represent that a single data element 12 has been transmitted.

If another data element is transmitted, such as data element 21, then IBLT 301' can be updated so as to represent this second data element. When limited to ten entries, element 21 is determined to produce the following three hash values $h_1(21)=3$, $h_2(21)=5$, $h_3(21)=8$, and is determined to have a larger hash value of 321. Accordingly, IBLT 301' can be updated so that the count, key sum, and hash sum at positions 3, 5 and 8 are updated to represent the transmission of element 21. Figure 5 is a chart 500 of IBLT 301" that has been updated to represent the transmission of both data elements 12 and 21. As shown in chart 500, count index positions 310f and 310i have been updated to indicate that single element is associated with this index position, while the key sum index positions 320f and 320i have been updated to "21" and hash sum index positions 330f and 330i have been updated to 321. In addition, count index position 310d has been updated to indicate that it now corresponds with two data elements. To this end, key sum index position 320d has been updated to be "33," which represents the addition of 12 and 21, while hash sum index position 330d has been updated to "907," which represents a summation of the hash values 586 and 321. IBLT 301" of chart 500 therefore represents an IBLT for the transmission of data elements 12 and 21.

The data elements that make up an IBLT can be determined in connection with what may be referred to as a peel operation, whereby pure index positions are identified within the IBLT. A pure index position is one that has a count equal to 1, and which has an associated hash sum index value that is equal to the hash value of the key sum value. In peeling an IBLT, a check can be performed to determine that a given index position is indeed pure by determining whether a combination of multiple insertions and removals has not caused an entry position to have an incorrect count of 1, thereby performing false positive prevention. Within IBLT 301", the 0, 5, 7, and 8 index positions are all pure index positions, in that positions 310a, 310f, 310h, and 310i each have a count of 1, and the corresponding positions 320a, 320f, 320h, and 320i represent key sum values that are correct with respect to hash sum values 330a, 330f, 330h, and 330i. Accordingly, these index positions can each be used in connection with a peel operation to identify a particular data packet that is to be a part of the transmission. After identifying a pure entry position, the corresponding key sum index value can be reported in the output and it may be removed from the IBLT as having been verified by the peel operation. Removal of a data element from an IBLT can operate in a similar fashion as insertion, but with the count being decremented, and with the subtraction of the key sum and hash sum values.

Accordingly, IBLTs within a network can be subjected to various IBLT operations, including the operations of insertion, deletion, subtraction, and peeling. An insertion operation can occur when a data element is inserted into an IBLT. For example, as disclosed herein, a data element may be hashed to multiple cells based on a predefined hash count. For each of these cells, the count is incremented, the data element ID is XORed with the cell's ID sum, and the hash of the element is XORed with the cell's hash sum. A deletion operation occurs when a data element is removed from an IBLT, and the element count is decremented. A subtraction operation can be performed between two IBLTs, so as to yield a new IBLT that encodes the set difference between the two IBLTs. The subtraction operation can be performed as part of the set reconciliation process, in that an IBLT maintained by a receiving network node can be subtracted from another IBLT that is provided by an upstream node.

If the IBLT provided by the upstream node represents all of the data elements that were previously transmitted, then subtracting the IBLT maintained at the receiving network node from the IBLT provided by the upstream node can be used to potentially identify the data elements that were lost during transmission. A peeling operation can be used to identify whether the data elements that were lost during transmission can be identified. In particular, the peeling operation may include retrieving the set difference from an IBLT that results from an IBLT subtraction operation. In particular, the peeling operation can iteratively identify "pure" cells that only contain information about a single data element. This data element can be identified and then deleted from the IBLT, and the peeling process can continue until no elements remain or no more cells can be decoded using the peeling process.

The number of lost packets that can be identified within a single IBLT is limited by the size of the IBLT. In particular, if the IBLT does not contain a sufficient number of index positions for a given set of data packets, the resulting peel operation for the set difference of IBLTs will not result in the pure cells that are needed in order to identify each of the lost data packets. In addition, when an IBLT is of a particular size, such as having the maximum number of index positions that can be contained within a single UDP packet, the upstream nodes within the network will need to provide the downstream nodes with an IBLT with a sufficient frequency so as to allow the downstream nodes to perform successful peel operations.

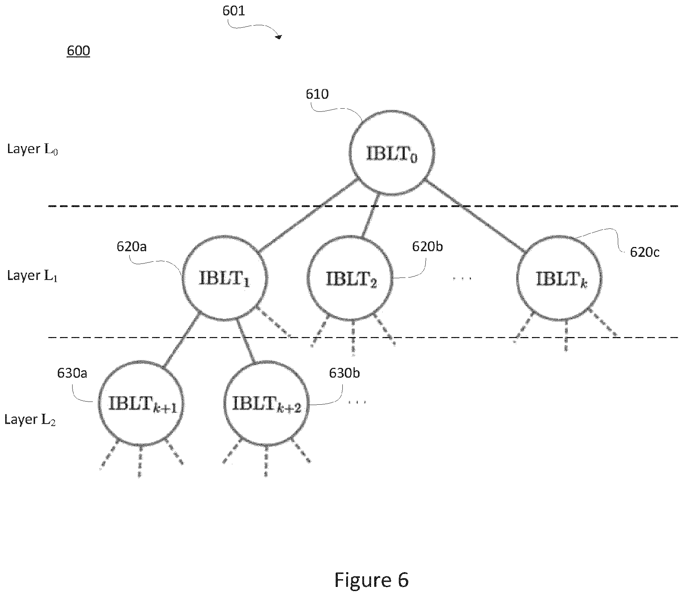

In accordance with aspects of the disclosure, the network can be configured to identify the attributes of the network and determine a sufficient bandwidth for the transmission of IBLTs within an IBLT hierarchy based on the network attributes. Figure 6 is a diagram 600 of an IBLT hierarchy based on IBLT positions 610, 620a-c, and 630a-b that are configured within L layers and have a branch factor of K. An IBLT hierarchy for this K-ary tree of L layers can have an individual $IBLT_i$ that corresponds to a particular subset of data packets that have been transmitted by the network node. The i-th IBLT can be arranged in a breadth-first order in which $0 \leq i < N$, where $N = (K^L-1)/(K-1)$ is the number of IBLTs in the hierarchy. For example, IBLT position 610 is within layer $L_0$ and contains $IBLT_0$, while IBLT positions 620a-c are within layer Li and contain $IBLT_1$, $IBLT_2$, and $IBLT_k$, respectively. The $IBLT_0$ of position 610 can be configured to correspond to a relatively large number of transmitted data packets, while $IBLT_1$, $IBLT_2$, and $IBLT_k$ in positions 620a-c can each be configured to correspond to a smaller subset of data packets. In Layer $L_2$, IBLT positions 630a and 630b contain $IBLT_{k+1}$ and $IBLT_{K+2}$, respectively. The IBLTs of Layer $L_2$ may be configured to correspond to even smaller subsets of data packets.

For example, $IBLT_{k+1}$ and $IBLT_{K+2}$ are configured to correspond to subsets of data packets that were designated in $IBLT_1$ of Layer $L_1$. Accordingly, each layer of hierarchy 601 can be configured to correspond to all of the transmitted data packets, however, the transmitted data packets are divided among a different number of IBLTs, based on the total number of IBLTs within the layer.

Each node of the network can be configured to maintain an IBLT hierarchy that can be indexed in a breadth-first order, and this IBLT index can be used to transmit IBLT packets to each node within the network in accordance with a sequence of IBLTs within the IBLT hierarchy. For example, network 601 may be configured so that the IBLTs of layers that are closer to a root node, such as $IBLT_0$ at IBLT position 610, are distributed in a manner that is better suited for recovering packets that are the result of relatively small amounts of packet loss, as these layers have a smaller number of nodes and allow for a relatively quick transmission time in connection with the IBLTs. However, IBLTs that are in layers positioned farther from the root, such as IBLTs within layer $L_2$, are more suited for recovering a larger amount of packet loss, as the larger number of IBLTs in these layers will provide a greater capacity for packet recovery. Accordingly, IBLTs within each layer of IBLT hierarchy 601 can be configured in accordance with a sequence that allows for sufficient recovery of lost packets without requiring an excessive amount of bandwidth in connection with transmitting IBLTs to downstream nodes.

The networks disclosed herein can be configured so that a host engine is maintained in connection with each of the nodes within the network. For example, a host engine may refer to a user-space high performance packet processing thread that is built on top of a kernel-bypassing user-space stack similar to hosts that are developed in connection with the Data Plane Development Kit (DPDK). The nodes of the network may be configured to send at least three types of transmitted packets. The first type of packet is a data packet, which contains the information that is being distributed within the network. These data packets are transmitted from upstream nodes to downstream nodes. The second type of packet is an IBLT packet, which can take the form of a UDP packet that contains a serialization of an IBLT within the body of the packet. In addition, the IBLT packet can contain an index of the IBLT within the hierarchy and a flag that identifies the packet as being an IBLT packet. Like the data packets, the network can be configured so as to transmit IBLT packets from upstream nodes to downstream nodes. The third type of packet is a request packet, which can contain a serialization of packet IDs that have been determined to be missing from prior data transmissions. For example, once a node receives an IBLT packet, it can use the received IBLT packet and a locally maintained IBLT to determine a difference between the two, so as to identify a set of missing data packets. The node can then transmit a request packet to an upstream node that identifies the set of missing data packets. The data packets that are identified within the request packet can be sent to the node that originally transmitted the request packet.

Each node within a network may split its available bandwidth into at least two parts. The first part of the node's bandwidth may be designated for transmitting data packets, while the second part of the node's bandwidth may be designated for synchronization, which can include transmitting IBLT and request packets. A node within a given hierarchy may be configured to send IBLTs in a specified order to its downstream nodes by encapsulating the IBLT data within IBLT packets and transmitting the IBLT packets through a synchronization portion of the bandwidth. In accordance with aspects of the disclosure, the ratio ($\alpha$) of IBLT packets to data packets depends on the characteristics of the network, including the amount of data loss that is experienced within the hierarchy of nodes.

The $IBLT_i$ of each node can be re-initialized to be empty, and as a node receives data packets from an upstream node, that node's $IBLT_i$ is updated in accordance with the received data packets. In processing received packets, each node can be configured to send enough IBLTs, in accordance with the node's hierarchy, to maintain a specified ratio ($\alpha$) between data packets and IBLT packets.

The nodes of the network can be configured to prevent duplicate packets from entering the hierarchy. Duplicate packets can occur based on redundancy within the network topology, as well as due to packets arriving out of order at the downstream nodes. An out-of-order delivery of packets can potentially cause a data packet to be delivered to a node after a related IBLT packet, even though the IBLT packet is based on the data packet having already been transmitted. Accordingly, the IBLT packet will identify the late-arriving data packet as having been lost, causing the node to request the data packet to be resent from an upstream node. This request will cause the node to receive the late-arriving data packet twice. In order to prevent this duplicative node from entering the transmission hierarchy, a cache map may be used to check the packet ID and determine if the identified packet has already entered the transmission hierarchy. The elements of the cache map may be cleaned after a specific period of time that is larger than the expected recovery latency of the network.

For example, when a data packet is received from an upstream node, the packet ID may be checked against a map of recently cached packets to prevent duplicates from entering the transmission hierarchy. If the packet ID has not been recently seen, the packet ID is inserted into the transmission hierarchy and the data is sent to the downstream nodes. Insertion of the packet ID into the transmission hierarchy can involve inserting the packet ID into each IBLT that lies on a random path from the root of the transmission hierarchy to a leaf node. This random path may be uniquely determined by the hash of the packet ID. The randomness of the insertion path can allow for a uniform distribution of packet IDs for each layer of the transmission hierarchy, making a peel failure less likely for any single IBLT belonging to a specific hierarchy layer. Thus, the full capacity of each IBLT may be leveraged for any single hierarchy layer. In addition, the IBLTs described herein can be implemented with a low number of layers, so as to prevent excessive computational overhead of the nodes.

Upon receiving an IBLT that was transmitted from an upstream node, the downstream node may access a locally maintained IBLT to determine if any data packets were lost during the previous transmissions. The local IBLT may be indexed based on the hierarchy of the node, so that the local IBLT corresponds to the same layer as the received IBLT from the upstream node. The downstream node may then perform a subtraction operation with respect to the received IBLT and the local IBLT. The subtraction operation for the two IBLTs can take the form of an element-wise XOR operation on the key sums within the IBLTs, and this subtraction operation can be used to identify a difference between the two IBLTs.

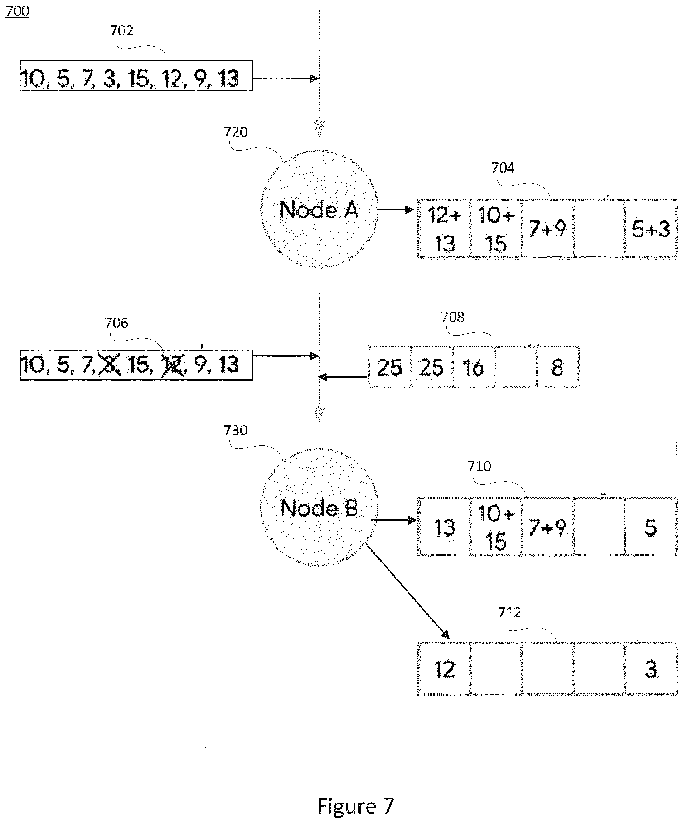

For example, Figure 7 is a block-diagram 700 providing a simplified representation of a portion of an IBLT in which upstream node 720 transmits data to downstream node 730, and downstream node 730 determines a difference between the received and local IBLT values to determine whether data packets have been lost.

In block-diagram 700, upstream node 720 receives data packets 702 containing data elements: 10, 5, 7, 3, 15, 12, 9, and 13. These data elements are added to an IBLT, a portion of which is represented as index 704. The addition of these data elements will be at positions within index 704 that correspond with particular hash values for those data elements. Upstream node 720 may transmit the data elements 10, 5, 7, 3, 15, 12, 9, and 13 to downstream node 730 as data transmission 706, as well as transmitting an IBLT, a portion of which is represented as IBLT 708. In connection with the data transmission between node 720 and node 730, data elements "3" and "12" may be lost, as is represented in the data transmission 706. Accordingly, downstream node 730 will have created an IBLT that is based only on data elements 10, 5, 7, 15, 9, and 13. A portion of the IBLT generated by downstream node 730 is represented as index 710. If downstream node 730 takes the difference between the received index 708 and the generated index 710, it will result in the difference values represented in index 712. Accordingly, node 720 can perform a subtraction and peel operation on the received and stored IBLTs to determine that data elements "3" and "12" were lost during the data transmission. Upon identifying missing data packets, a node may immediately insert the missing packet IDs into the hierarchy, so as to prevent a diversion of the downstream node from the upstream node in case the packet recovery takes longer than expected.

Upon determining the missing packets identified in index 712, downstream node 730 may transmit a request to an upstream node, such as node 720, that requests the identified missing data packets. This request can take the form of a request packet, which can contain the packet IDs for all missing data packets. Upon receiving the request packet from downstream node 730, upstream node 720 may collect the packet IDs within the request packet for all identified missing data packets and transmit to the downstream node 730 a copy of the missing data packets that correspond to the collected packet IDs.

Request packets may be sent with a specified frequency that is large enough to prevent excessive delay in the recovery process. Given that many packet IDs can be placed into a single request packet, the bandwidth associated with request packets can be low relative to IBLT packets.

In accordance with aspects of the disclosure, the transmission hierarchy for the distribution of IBLTs can be established based on an analysis of the network, including network topology and data packet loss within the network. The transmission hierarchy can establish the order and frequency for which IBLTs are provided to downstream nodes. This pattern of IBLT transmissions can be optimized to reduce the expected latency for recovering lost packets. In addition, the IBLTs may be distributed in accordance with the index of IBLTs discussed herein.

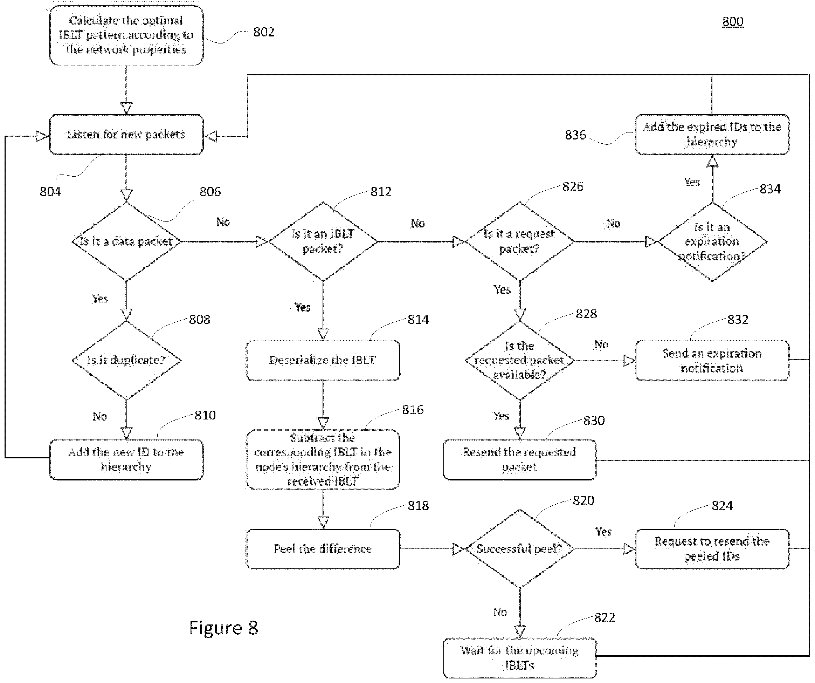

Figure 8 is a flow-diagram 800 for a system of network nodes in accordance with aspects of the disclosure. Operations associated with flow-diagram 800 may be performed by one or more nodes within a multicast protocol network. Each node may be a networked computing device, such a computing router or a networked server having one or more processors with access to electronic memory. While operations within flow-diagram 800 are shown in a particular order, one or more operations may occur in a different order or simultaneously with other operations in accordance with aspects of the disclosure. In addition, one or more operations may be added or removed in accordance with the disclosure.

In block 802, the system may determine the frequency for which IBLTs are to be transmitted to each of the downstream nodes. This frequency can be based on a transmission pattern according to network properties. For example, the network may be tested or otherwise analyzed to determine the number of packets that are lost during transmission to downstream nodes. This analysis may include identification of the overall rate of packet loss, as well as the occurrence of bursts in packet loss, in which a number of consecutively, or near-consecutively, transmitted packets are lost. In addition, the analysis of the network may include dividing the nodes of the network into different sets of node layers.

The analysis of the network properties can result in a determination of the frequency at which IBLTs are to be distributed to each downstream node within the network. This determination can be based on balancing transmission parameters, including latency, bandwidth, and recovery capacity for lost packets. In addition, the frequency of IBLT distribution may be greater for some downstream nodes than for others. For example, a network may prioritize recovery of smaller sized packet losses for the root nodes relative to the leaf nodes. In this instance, a node that is within a node layer that is located closer to the root node of the network may receive IBLTs at a higher frequency than downstream leaf nodes that are located farther from the root node.

The frequency of distribution to the downstream nodes may be achieved by indexing the downstream nodes based on their position within the network, and by generating an IBLT hierarchy for distributing IBLTs to the downstream nodes based on this position. For example, the IBLTs may be distributed to each downstream node in accordance with a predetermined sequence or pattern, and this sequence may allow for certain nodes to receive IBLTs at a greater frequency than other nodes.

In block 804, nodes within the network can listen for new packets to be transmitted to them over the network. Upon receiving a packet, it can be determined whether the packet is a data packet from an upstream node (block 806). This determination can be made based on a flag within the packet that identifies the packet by type, such as identifying the packet as a data packet, IBLT packet, or request packet. If the received packet is determined to be a data packet, the receiving node may determine whether the data packet is a duplicate of a previously received packet (block 808). This determination can be made by determining the ID of the received packet and checking this ID against a map of recently cached packets. If the ID of the received data packet matches a cached packet, then the received data packet can be ignored, as its duplicate has already been placed into the IBLT hierarchy. However, if the received data packet is determined not to be a duplicate, then the received data packet can be added to the IBLT hierarchy, which can include adding the information for the data packet to the stored IBLT that is maintained by the receiving node, as well as transmitting the data packet to another downstream node (block 810).

Returning to block 806, if the node determines that the received packet is not a data packet, the node may determine whether the received packet is an IBLT packet that has been transmitted from an upstream node (block 812). If the received packet is an IBLT packet, the node can perform a deserialization operation on the IBLT packet (block 814). This deserialization operation accesses the IBLT within the received packet. In accessing the IBLT within the received packet, the node may perform a subtraction operation with respect to the stored IBLT that is maintained within the receiving node's IBLT hierarchy and the received IBLT (block 816). As discussed herein, the subtraction operation determines a difference between the two IBLTs on an element-wise basis. In block 818 a peel operation is performed on the difference between the two IBLTs. This peel operation identifies which data packets were lost during transmission, so as to cause the difference between the stored IBLT and the transmitted IBLT that was received from the upstream node.

In block 820, a determination is made whether the peel operation is successful. An unsuccessful peel operation is the result of being unable to identify the lost data packets from the difference between the two IBLTs. This may occur if too many data packets have been lost, so as to prevent the difference between the two IBLTs from identifying individual data packets. In the event of a failed peel operation, the receiving node may wait for additional IBLT packets to be received (block 822), this may also include transmitting an indication to an upstream node that the recently transmitted IBLT resulted in a failed peel operation. If the peel operation is successful, the receiving node may send a request for the data packets that are identified to have been missing (block 824). For example, the node may transmit a request packet to an upstream node, with the request packet containing the packet IDs for each data packet that was identified from the peel operation.

Returning to block 812, if the received packet is not an IBLT packet, it may be determined whether the received packet is a request packet (block 826). If the received packet is a request packet, the node can determine whether the requested data packets are available (block 828). For example, a node may maintain a cache of recently transmitted data packets. This cache may be accessed in response to a request for one or more data packets to be retransmitted. If one or more of the requested data packets are available, the node may respond to the request by transmitting the available data packets (block 830). If one or more of the requested data packets are not available, the node may transmit an expiration notification, which notifies the requesting node of that the requested data packets are no longer available (block 832). Returning to block 826, if the received packet is not a request packet, a determination may be made as to whether the received packet is an expiration notification (block 834). If so, the IDs for the expired data packets can be added to the IBLT hierarchy (block 836).

Various operations for flow-diagram 800 can result in returning to block 804, in which the node listens for additional packets. However, it should be appreciated that nodes within the network may be configured to continuously listen for packets, including during periods of time in which other operations are being performed, and a node may be configured to perform operations in parallel in connection with multiple packets.

As discussed herein, the transmission of IBLTs to downstream nodes can be based on a pattern of IBLT transmissions to nodes within the network, with the pattern being based on an IBLT hierarchy. For example, the pattern of IBLT transmission can be represented by a sequence of indices of IBLTs:

$i_1, i_1, ..., i_t \varepsilon \{0,1,...,N-1\}$

Where "N" is the highest index in the hierarchy and "t" is the length of the transmission pattern. The hierarchy can be configured so that each IBLT appears at least once in the sequence, but some IBLTs can be repeated more than once, thereby increasing the frequency for which those IBLTs will be transmitted. For many networks, the probability of a significant loss of data packets is less likely than the occurrence of a small loss of data packets. Thus, the IBLTs for nodes that are located in a layer that is closer to the root can be sent IBLTs more frequently within the pattern to prioritize the recovery of smaller losses. With regard to the potential patterns of IBLT transmission, one can be determined to achieve an optimal expected recovery latency performance in accordance with an observed network-loss model.

In determining a sequence of IBLT transmissions that achieves optimal expected recovery latency, a network-loss model can be used. The network-loss model can accommodate the observed packet loss across a network. For example, packet loss in a network can be observed to be bursty, in that a large amount of packet loss may come in a consecutive, or near-consecutive, sequence over a short period of time. While the packet-loss model may set an upper bound on the number of packets that can be lost during a particular time-frame of transmission, the model can be configured to accommodate the bursty nature of packet loss. In particular, the IBLT-based recovery protocol is capable of fully recovering lost data packets for any instance in which a sufficient number of IBLTs are transmitted to downstream nodes to account for some determined maximum amount of packet loss. In addition, for a bursty packet-loss model, the size of each burst of lost packets can be bounded within some probability distribution relating to the number of packets that are lost within a particular set of transmissions.

A 1.5 round-trip time (RTT) latency can exist for the recovery of lost packets due to the propagation delay between the upstream node and the downstream node. This latency could constitute the dominant portion of the overall latency in instances in which the RTT between the upstream and downstream nodes is high. However, if the network is configured so that the upstream and downstream nodes have a relatively low RTT, the IBLT transmission pattern can constitute a substantial portion of the overall latency. This can be referred to as pattern-induced latency, which can be minimized in accordance with aspects of the disclosure. The pattern-induced latency can be addressed differently, depending on the extent to which the network is determined to experience bursty transmission loss. For a network that experiences bursts in packet loss, the pattern-induced latency can be normalized by the size of the packet-loss bursts. If propagation-related latencies are ignored, and if the delay time begins from when the first packet is lost, a delay will be proportional to the size of the burst for the downstream node to receive the first IBLT after the packet loss burst is over. This delay is approximately $b/r$, where $b$ is the size of the burst and $r$ is the packet rate of the network. The network may be configured in accordance with an IBLT hierarchy in which recovery begins when the burst of packet loss is over. Therefore, the time that it takes for the burst to end contributes to the recovery time for all of the packets lost in the burst. The amount that this delay contributes to the expected latency of the burst is roughly equal to $b/(2r)$. Given that $r$ is a fixed constant, the pattern-induced latency is proportional to the burst size. A normalized pattern-induced latency can remove this effect and provide improved optimization criteria. Accordingly, the network may be configured to identify an IBLT transmission pattern that minimizes the expected normalized pattern-induced latency.

The number of lost packets that can be identified by a single IBLT depends on the size of the IBLT table and the number of hash functions utilized by the data structure. This number can be referred to as "the peel capacity" of an IBLT, which can be denoted by the constant $C$. Thus, $C$ corresponds to the number of packet IDs that an IBLT in the hierarchy will successfully peel with a high probability. In addition, the size of the packet-loss burst can be denoted as $b$, while The capacity of the $i$-th layer of the hierarchy would correspond to $C*K^i$, given that there are $K^i$ IBLTs on the $i$-th layer of the network. The term $q_i$ (for $0 \leq i < L$) can be defined as the probability that layer i is the best layer for recovering the lost packets, so that:

$$q_i = P(\, K^{i-1} < b/C \leq K^i \,)$$

The values of $p_i$s can be derived from a bounded probability distribution $Z$, in which the size of each burst is assumed to be within the identified bound. The normalized pattern-induced latency for a particular burst size can also be calculated. For example, let $K^{i-1} < b/C \leq K^i$ be an arbitrary burst size and let $f_i$ be the average count of layer $i$ IBLTs the pattern transmits in a single second. Then the average pattern-induced latency for receiving all $K^i$ by the downstream node will be $K^i/f_i$. In addition, the normalized pattern-induced latency for burst size $b$ will be $K^i/(f_i*b)$, which can be used to determine the expected normalized pattern-induced latency over the burst sizes $K^{i-1} < b/C \leq K^i$ in accordance with the following:

$$E\left[\frac{K^i}{f_i} \,|\, K^{i-1} < \frac{b}{C} \leq K^i\right] = \frac{K^i}{f_i} * E\left[\frac{1}{b} \,|\, K^{i-1} < \frac{b}{C} \leq K^i\right]$$

In addition, to simplify the notation, let $B_i$ represent the following:

$$B_i = E\left[K^{i-1} < \frac{b}{c} \leq K^i\right]$$

Accordingly, the value of $B_i$ can be determined from the distribution $Z$, and the expected normalized pattern-induced latency over all bursts can be expressed as follows:

$$g(f_0, f_1, \ldots, f_{L-1}) = E\left[\frac{K^i}{f_i \cdot b}\right] = \sum_{i=0}^{L-1} q_i \cdot \left(\frac{K^i}{f_i} \cdot B_i\right)$$

The network may then be configured to minimize g subject to $f_i \geq 0$ and subject to:

$$f = \Sigma_{i=0}^{L-1} f_i$$

This is for some fixed $f$ which is the average number of IBLTs the engine transmits to downstream nodes in a second. In addition, a Cauchy-Schwarz inequality can then be used to obtain the minimum as follows:

$$g(f_0, f_1, \ldots, f_{L-1}) \cdot f = \left( \sum_{i=0}^{L-1} \frac{q_i \cdot K^i \cdot B_i}{f_i} \right) \cdot \left( \sum_{i=0}^{L-1} f_i \right)$$
$$\geq \left( \sum_{i=0}^{L-1} \sqrt{q_i \cdot K^i \cdot B_i} \right)^2$$

This is with the equality occurring when the following set of terms equals some constant $c$ as follows:

$$\frac{q_i \cdot K^i \cdot B_i}{f_i^2} = c$$

When this is placed within

$$f = \sum_{i=0}^{L-1} f_i$$

Then the optimal values for $f_i$s are as follows:

$$f_i = f \cdot \frac{\sqrt{q_i \cdot K^i \cdot B_i}}{\sum_{j=0}^{L-1} \sqrt{q_j \cdot K^j \cdot B_j}}$$

This pattern may be achieved by fixing the length of the pattern and iteratively assigning empty spots within the pattern with the following to each layer $i$:

$$\frac{q_i \cdot K^i \cdot B_i}{\sum_{j=0}^{L-1} q_j \cdot K^j \cdot B_j}$$

Once each spot within the pattern has an assigned layer, these spots may be filled incrementally filled with an IBLT that corresponds to that layer, with a loop-over occurring back to the beginning of the layer, once all of the IBLTs from that layer are inserted. If some of the values for the following expression are irrational, a larger pattern size can be used to better approximate the minimum expected normalized pattern-induced latency:

$$\sqrt{q_i \cdot K^i \cdot B_i}$$

Otherwise, the expected minimum can be achieved by choosing the appropriate pattern size as follows:

$$\min g(f_0, f_1, \ldots, f_{L-1}) = \frac{1}{f} \left( \sum_{j=0}^{L-1} \sqrt{q_j \cdot K^j \cdot B_j} \right)^2$$

The minimum expected normalized pattern-induced latency provided above is based on the network loss model. However, an upper bounding of the latency may also be used, when a specific network loss model is not available.

As discussed herein, the transmission of IBLTs allows for the downstream nodes to identify the specific data packets that have been lost during transmission. However, if the network experiences a large failure, the number of lost packets can prevent the downstream nodes from being able to perform a successful peel operation. In this instance, the lost packets may not be recovered, however in this instance the network can be reinitialized, with the downstream nodes replacing all of its stored IBLTs with the corresponding IBLTs of the upstream nodes and continuing from there. In addition, if it is determined that the IBLT hierarchy is not providing IBLTs with a sufficient frequency, so as to allow for successful peel operation, then the IBLT frequency may be modified. For example, additional layers within the IBLT hierarchy may be added, so as to allow at least some of the downstream nodes to receive IBLTs with a greater frequency, thereby preventing the peel operations from failing.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples. Further, the same reference numbers in different drawings can identify the same or similar elements.

**Claims**

1. A system for data transmission comprising:
   one or more upstream nodes within a network that are configured to:

   transmit data packets to a plurality of downstream nodes;
   maintain invertible bloom lookup tables, IBLTs, that correspond to the data packets transmitted to the plurality of downstream nodes; and
   transmit the IBLTs to the plurality of downstream nodes in accordance with a frequency that is based, at least in part, on one or more network properties relating to packet loss for transmissions to the downstream nodes.

2. The system of claim 1, wherein a first subset of IBLTs are transmitted to one or more downstream nodes in accordance with a first frequency, and a second subset of IBLTs are transmitted to one or more downstream nodes in accordance with a second frequency, and wherein the first frequency is less than the second frequency,
   wherein, optionally, the first subset of IBLTs correspond to a larger number of data packets than the second subset of IBLTs.

3. The system of claim 1 or 2, wherein the one or more network properties on which the frequency of IBLT transmission is based comprises determining a latency of packet recovery due to potential bursts in packet loss,
   wherein, optionally, the one or more network properties on which the frequency of IBLT transmission is based further comprises a size of the potential bursts in packet loss.

4. The system of one of claims 1 to 3, wherein the IBLTs are indexed based on an IBLT hierarchy having a plurality of hierarchy layers, and wherein the frequency of IBLT transmission is based on a position of each IBLT within the IBLT hierarchy.

5. The system of claim 4, wherein the frequency of IBLT transmission is based on a sequence for transmitting the IBLTs to the downstream nodes in accordance with the IBLT hierarchy.

6. The system of claim 4 or 5, wherein transmitting the IBLTs to the plurality of downstream nodes comprises transmitting IBLTs from the plurality of hierarchy layers to one or more of the plurality of downstream nodes.

7. The system of one of claims 1 to 6, wherein a number of hierarchy layers within the IBLT hierarchy is based on analysis of observed packet loss within the network.

8. The system of one of claims 1 to 7, wherein the plurality of downstream nodes are configured to:

   maintain a stored IBLT that is based on the data packets that are received from the one or more upstream nodes;

determine a difference between the IBLT that was transmitted and the stored IBLT;
identify data packets that were lost in transmission, based on the resulting difference;
request lost data packets from the one or more upstream nodes.

9.  A method for data transmission comprising:

    transmitting, by an upstream node, data packets to a plurality of downstream nodes within a network;
    maintaining invertible bloom lookup tables, IBLTs, that correspond to the data packets transmitted to the plurality of downstream nodes;
    transmitting the IBLTs to the plurality of downstream nodes in accordance with a frequency that is based, at least in part, on one or more network properties relating to packet loss for transmissions to the downstream nodes.

10. The method of claim 9, wherein a first subset of IBLTs are transmitted to one or more downstream nodes in accordance with a first frequency, and a second subset of IBLTs are transmitted to one or more downstream nodes in accordance with a second frequency, and wherein the first frequency is less than the second frequency,
    wherein, optionally, the first subset of IBLTs correspond to a larger number of data packets than the second subset of IBLTs.

11. The method of claim 9 or 10, wherein the one or more network properties on which the frequency of IBLT transmission is based comprises determining a latency of packet recovery due to potential bursts in packet loss,
    wherein, optionally, the wherein the one or more network properties on which the frequency of IBLT transmission is based further comprises determining a size of the potential bursts in packet loss.

12. The method of one of claims 9 to 11, wherein the IBLTs are indexed based on an IBLT hierarchy having a plurality of hierarchy layers, and wherein the frequency of IBLT transmission is based on a position of each IBLT within the IBLT hierarchy.

13. The method of claim 12, wherein the frequency of IBLT transmission is based on a sequence for transmitting the IBLTs to the downstream nodes in accordance with the IBLT hierarchy, and/or wherein transmitting the IBLTs to the plurality of downstream nodes comprises transmitting IBLTs from the plurality of hierarchy layers to one or more of the plurality of downstream nodes.

14. The method of one of claims 9 to 13, wherein a number of hierarchy layers within the IBLT hierarchy is based on analysis of observed packet loss within the network.

15. The method of one of claims 9 to 14, further comprising:

    maintaining a stored IBLT that is based on the data packets that are received from the one or more upstream nodes;
    determining a difference between the IBLT that was transmitted and the stored IBLT;
    identifying data packets that were lost in transmission based on the resulting difference; and
    requesting lost data packets from the one or more upstream nodes.

100

Figure 1

Figure 2

301 —

300

| | | 310a | 310b | 310c | 310d | 310e | 310f | 310g | 310h | 310i | 310j |
|---|---|---|---|---|---|---|---|---|---|---|---|
| | | 320a | 320b | 320c | 320d | 320e | 320f | 320g | 320h | 320i | 320j |
| Counts: | | 0 | 0 | 0 | 0 | 0 | 0 | 0 | 0 | 0 | 0 |
| Key sum: | | 0 | 0 | 0 | 0 | 0 | 0 | 0 | 0 | 0 | 0 |
| Hash sum: | | 0 | 0 | 0 | 0 | 0 | 0 | 0 | 0 | 0 | 0 |
| | | 330a | 330b | 330c | 330d | 330e | 330f | 330g | 330h | 330i | 330j |

Figure 3

301' —

400

| | | 310a | 310b | 310c | 310d | 310e | 310f | 310g | 310h | 310i | 310j |
|---|---|---|---|---|---|---|---|---|---|---|---|
| | | 320a | 320b | 320c | 320d | 320e | 320f | 320g | 320h | 320i | 320j |
| Counts: | | 1 | 0 | 0 | 1 | 0 | 0 | 0 | 1 | 0 | 0 |
| Key sum: | | 12 | 0 | 0 | 12 | 0 | 0 | 0 | 12 | 0 | 0 |
| Hash sum: | | 586 | 0 | 0 | 586 | 0 | 0 | 0 | 586 | 0 | 0 |
| | | 330a | 330b | 330c | 330d | 330e | 330f | 330g | 330h | 330i | 330j |

Figure 4

301'' —

500

| | | 310a | 310b | 310c | 310d | 310e | 310f | 310g | 310h | 310i | 310j |
|---|---|---|---|---|---|---|---|---|---|---|---|
| | | 320a | 320b | 320c | 320d | 320e | 320f | 320g | 320h | 320i | 320j |
| Counts: | | 1 | 0 | 0 | 2 | 0 | 1 | 0 | 1 | 1 | 0 |
| Key sum: | | 12 | 0 | 0 | 33 | 0 | 21 | 0 | 12 | 21 | 0 |
| Hash sum: | | 586 | 0 | 0 | 907 | 0 | 321 | 0 | 586 | 321 | 0 |
| | | 330a | 330b | 330c | 330d | 330e | 330f | 330g | 330h | 330i | 330j |

Figure 5

Figure 6

700

702

| 10, 5, 7, 3, 15, 12, 9, 13 |
| --- |

720

Node A

704

| 12+ 13 | 10+ 15 | 7+9 | | 5+3 |
| --- | --- | --- | --- | --- |

706

| 10, 5, 7, ~~3~~, 15, ~~12~~, 9, 13 |
| --- |

708

| 25 | 25 | 16 | | 8 |
| --- | --- | --- | --- | --- |

730

Node B

710

| 13 | 10+ 15 | 7+9 | | 5 |
| --- | --- | --- | --- | --- |

712

| 12 | | | | 3 |
| --- | --- | --- | --- | --- |

Figure 7

800

- 802 Calculate the optimal IBLT pattern according to the network properties
- 804 Listen for new packets
- 806 Is it a data packet?
  - Yes → 808 Is it duplicate?
    - No → 810 Add the new ID to the hierarchy
  - No → 812 Is it an IBLT packet?
    - Yes → 814 Deserialize the IBLT → 816 Subtract the corresponding IBLT in the node's hierarchy from the received IBLT → 818 Peel the difference → 820 Successful peel?
      - Yes → 824 Request to resend the peeled IDs
      - No → 822 Wait for the upcoming IBLTs
    - No → 826 Is it a request packet?
      - Yes → 828 Is the requested packet available?
        - Yes → 830 Resend the requested packet
        - No → 832 Send an expiration notification
      - No → 834 Is it an expiration notification?
        - Yes → 836 Add the expired IDs to the hierarchy

Figure 8

**EUROPEAN SEARCH REPORT**

Application Number

EP 25 19 4449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SABUZIMA NAYAK ET AL: "A Review on Impact of Bloom Filter on Named Data Networking: The Future Internet Architecture", ARXIV.ORG, CORNELL UNIVERSITY LIBRARY, 201 OLIN LIBRARY CORNELL UNIVERSITY ITHACA, NY 14853, 7 April 2020 (2020-04-07), XP081662914, * paragraph [Section2.1"MeasurementTasks"] * | 1-15 | INV. H04L45/7459 H04L45/023 ADD. H04L45/48 |
| A | CN 112 822 077 B (UNIV XI AN JIAOTONG; 54TH RES INST CHINA ELECTRONICS TECH GROUP CORP) 9 December 2022 (2022-12-09) * paragraph [0001] - paragraph [0033] * | 1-15 | |

TECHNICAL FIELDS
SEARCHED     (IPC)

H04L

The present search report has been drawn up for all claims

| Place of search | Date of completion of the search | Examiner |
|---|---|---|
| The Hague | 12 December 2025 | Ciurel, Cristian |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
..................................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 19 4449

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | Publication date | Patent family member(s) | Publication date |
|---|---|---|---|
| CN 112822077 B | 09-12-2022 | NONE | |

For more details about this annex : see Official Journal of the European Patent Office, No. 12/82